# EUROPÄISCHE PATENTANMELDUNG

(11) **EP 1 977 856 A1**
(43) Veröffentlichungstag der Anmeldung: **08.10.2008**
(21) Anmeldenummer: 08002243.7
(22) Anmeldetag: 07.02.2008
(51) Int. Cl.: B23Q 39/04

(54) **Werkzeugmaschine**

(30) Priorität: 04.04.2007 DE 102007016270
(71) Anmelder: Witzig & Frank GmbH, 77652 Offenburg (DE)
(72) Erfinder: Bauer, Walter, 75397 Simmozheim (DE)
(74) Vertreter: Rüger, Barthelt & Abel Patentanwälte

(57) **Zusammenfassung**

Zur Großserienfertigung haben sich Fertigungsautomaten etabliert, die werkstückspezifisch angeordnete und ausgerichtete Bearbeitungseinheiten aufweisen. Erfindungsgemäß wird die Struktur eines solchen Fertigungsautomaten in ein unspezifisches vereinheitlichtes Maschinengestell (2) und Adapter (25, 26) aufgeteilt, die über einheitliche Schnittstellen an das Maschinengestell (2) angeschlossen sind und auf Seiten der Bearbeitungseinheiten zur Aufnahme derselben individualisiert sind. Außerdem können die Adapter (25, 26) werkstückspezifisch individualisiert sein, indem sie hinsichtlich der Vertikal-, Horizontal- und Radialpositionierung sowie hinsichtlich der Ausrichtung der Arbeitsspindeln der Bearbeitungseinheiten spezifisch für das zu fertigende Werkstück eingerichtet sind. Durch Wechsel der Adapter und Bearbeitungseinheiten kann die Werkzeugmaschine (1) mit einfachen Mitteln schnell und kostengünstig umgerüstet werden.

## Beschreibung

Die Erfindung betrifft eine Werkzeugmaschine zur spanabhebenden Bearbeitung von Werkstücken.

Werkzeugmaschinen sind in vielfältigster Form bekannt. Werkzeugmaschinen weisen grundsätzlich ein Maschinengestell, eine Einrichtung zum Lagern von Werkstücken und eine Bearbeitungseinrichtung, beispielsweise in Form einer Bearbeitungseinheit auf, wobei das Maschinengestell eine ruhige Lagerung des Werkstücks und der Bearbeitungseinheit sicherzustellen hat. In Abhängigkeit von dem jeweils verfolgten Zweck sind unterschiedliche Maschinenkonzepte entwickelt worden. Z.B. offenbart die DE 39 41 480 A1 eine Werkzeugmaschine mit käfigartigem Maschinengestell, das den Arbeitsraum umschließt. Von oben her ist in dem Maschinengestell hängend ein Werkstückträger angeordnet, der um eine Vertikalachse drehbar gelagert ist. Die Werkstückaufspannplätze an dem Außenumfang des Werkstückträgers angeordnet. Das zentral unten mittig aufgeständerte Maschinengestell weist sowohl an seiner Oberseite als auch an seinem Außenumfang als auch an seiner Unterseite Aufnahmen für Bearbeitungseinheiten auf. Die Bearbeitungseinheiten enthalten zumindest eine oder aber mehrere Arbeitsspindeln, die beispielsweise nach Art eines Revolvers ihren Platz wechseln können. In jeder Arbeitsspindel kann ein Werkzeug gehalten sein. Des Weiteren sind die Bearbeitungseinheiten mit Mitteln zur Bewirkung einer Verstell- und Zustellbewegung versehen, wie beispielsweise Schlitten, Linearachsen, usw. Weiter gehört zu den Bearbeitungseinheiten eine Antriebseinrichtung für die Arbeitsspindel. Die Werkstücke sind an einem zentralen Werkstückträger gehalten und durchlaufen alle Bearbeitungsstationen im Rundtakt.

Dieses Maschinenkonzept hat sich wegen der mit dem käfigartigen Maschinengestell erreichbaren Steifigkeit und der Möglichkeit der Integration vieler verschiedener Bearbeitungseinheiten und der daraus resultieren hohen Produktivität bewährt. Allerdings muss bei der Konzeption des Maschinengestells darauf Rücksicht genommen werden, an welchen Stellen und in welchen Ausrichtungen Bearbeitungseinheiten zu montieren sind. Die Werkzeugmaschine dieser Bauart gehört deshalb in die Klasse der werkstückspezifischen Maschinen, die für die Groß- und Größtserienfertigung geeignet sind. Das Maschinengestell ist eine werkstückspezifische Einzelanfertigung. Die Umrüstung der Werkzeugmaschine auf andere Produkte ist nur in äußerst eingeschränktem Maße möglich. Der Maschinenanwender sieht sich aber mit immer kürzeren Produktwechselzyklen konfrontiert. Deshalb entscheiden sich Maschinennutzer gelegentlich für vergleichsweise wesentlich weniger produktive Universalmaschinen, Bearbeitungszentren oder dergleichen. Es wäre zu wünschen, weiterhin und insbesondere angesichts kürzerer Produktlebenszyklen über die hohe Produktivität von Werkzeugmaschinen der Bauart gemäß DE 39 41 480 A1 zu verfügen.

Die im Weiteren aus der EP 0607793 A1 bekannte Werkzeugmaschine arbeitet ebenfalls mit geschlossenem Maschinengestell und hängendem Werkstückträger. Dieser ist jedoch kreuzartig ausgebildet, wobei die Werkstückaufspannplätze an den einzelnen Flanken der Arme des Kreuzes angeordnet sind. Die Werkstückaufspannplätze werden durch Drehtische gebildet, was zusätzliche Bearbeitungsmöglichkeiten und Flexibilität erbringt.

Die Achsen der einzelnen Bearbeitungseinheiten sind, wenn alle zu den Bearbeitungseinheiten gehörigen Verstelleinrichtungen mittig angeordnet sind, in einer gemeinsamen Ebene horizontal liegend und zueinander parallel oder im rechten Winkel angeordnet. Die Bearbeitungseinheiten sind unmittelbar an dem Maschinengestell gelagert. Diese Werkzeugmaschine stellt einen Schritt in Richtung Universalbearbeitungsmaschine dar, wobei spezifische Vorteile der erstgenannten Bauart mit werkstückspezifisch angeordneten Bearbeitungseinheiten aufgegeben werden.

Der Erfindung liegt die Aufgabe zugrunde, eine Werkzeugmaschine zu schaffen, die höchste Produktivität gestattet und an geringe Produktlebenszyklen anpassbar ist.

Diese Aufgabe wird mit der Werkzeugmaschine nach Anspruch 1 gelöst:

Die erfindungsgemäße Werkzeugmaschine weist ein Maschinengestell auf, das einen Werkstückträger und zumindest eine Bearbeitungseinheit trägt. Zwischen dem Maschinengestell und der Bearbeitungseinheit ist ein Adapter vorgesehen, der einerseits mit dem Maschinengestell und andererseits mit der Bearbeitungseinheit verbunden ist. Vorzugsweise weist das Maschinengestell wenigstens zwei oder mehrere Anschlussstellen auf, die untereinander gleich ausgebildet sind. Zwischen den Adaptern und den Anschlussstellen besteht somit eine einheitliche Schnittstelle zur Befestigung unterschiedlicher Adapter. Die verschiedenen Adapter ermöglichen unterschiedliche Positionierungen von Bearbeitungseinheiten an dem Maschinengestell. Soll die Werkzeugmaschine an eine neue Werkstückserie angepasst werden, können Bearbeitungseinheiten und/oder Adapter gewechselt werden, um Bearbeitungseinheiten in geänderten Positionen oder mit geänderten Ausrichtungen zu montieren. Die Adapter stellen den Bezug zwischen den einheitlichen Schnittstellen des Maschinengestells und den individuellen Bearbeitungseinheiten-Positionen her. Eine vorhandene Werkzeugmaschine kann somit mit relativ geringem materiellen und personellen Aufwand umgebaut werden und über mehrere Produktzyklen hinweg in Gebrauch bleiben. Außerdem ist es möglich, rückgenommene Maschinen im Werk umzurüsten und in modifizierter Form wieder in Verkehr zu bringen. Die Individualisierung der Werkzeugmaschine ist Sache der verwendeten Adapter und Bearbeitungseinheiten.

Bei einer vorteilhaften Ausführungsform bildet das Maschinengestell einen Käfig, der die auf die Bearbeitungseinheiten einwirkenden Kräfte aufgrund seiner räumlichen Struktur gut aufnimmt. Das käfigartige Maschinengestell gestattet die gleichzeitige Bearbeitung mehrere Werkstücke mit mehreren Bearbeitungseinheiten, wobei große Bearbeitungskräfte auftreten können.

Vorzugsweise ist das Maschinengestell skelettiert. In seiner Ausbildung als Käfig besteht es somit im Wesentlichen aus radial und axial verlaufenden Streben, wobei die radial verlaufenden Streben Teil einer Kopfplatte und/oder einer Grundplatte sein können. Zwischen den Streben sind die Anschlussstellen für die Adapter festgelegt. Die Anschlussstellen können wahlweise mit Adaptern und Bearbeitungseinheiten oder Abschlussplatten versehen sein, die keine Bearbeitungseinheiten tragen. Die Adapter und/oder die Abschlussplatten überbrücken die an den Anschlussstellen vorgesehenen Fenster und schließen diese somit vorzugsweise vollständig. Außerdem kann vorgesehen werden, dass die Abschlussplatten und/oder Fenster eine lasttragende Verbindung zwischen benachbarten Streben herstellen, um das Maschinengestell weiter auszusteifen. Die Adapter sind mit dem übrigen Maschinengestell vorzugsweise lösbar mittels Schrauben verbunden, so dass sie mit geringem Aufwand demontiert werden können. Die Anschlussstellen weisen vorzugsweise eine Positionierfläche auf, die z.B. als ebene Fläche ausgebildet ist und der Befestigungsmittel für die Bearbeitungseinheiten oder auch Abschlussplatten zugeordnet sind. Die Positionierfläche kann beispielsweise eine ebene streifenartige Fläche sein, die ein in dem Maschinengestell vorgesehenes Fenster entlang seines gesamten Umfangs umgibt oder lediglich an Stellen desselben ausgebildet ist. Außerdem können dazu rechtwinklig orientierte Flächen in Form von Stufen oder dem umlaufenden Rand des Fensters als Positionierfläche dienen.

Das käfigartige Maschinengestell besteht vorzugsweise aus Seitenstreben, die in Gebrauch vertikal orientiert und parallel zueinander angeordnet sind, sowie aus einer Kopfplatte und/oder einer Grundplatte, die durch die Seitenstreben miteinander verbunden sind. Vorzugsweise sind die Seitenstreben dabei in einheitlichen Abständen zu einer Mittelachse des Maschinengestells angeordnet. Die Mittelachse wird durch die Drehachse des Werkstückträgers bestimmt. Somit ist das Maschinengestell durch einen ungefähr zylindrischen Käfig gebildet, dessen äußere Stäbe axial verlaufen. Die zwischen den Stäben definierten Anschlussstellen können so ausgebildet sein, dass sie eine einzige Positionierung der jeweiligen Adapter zulassen. Es ist jedoch auch möglich, verschiedene Adaptermontagepositionen vorzusehen, um ein und denselben Adapter zwischen den Seitenstreben, beispielsweise in unterschiedlichen Axialpositionen, montieren zu können.

Die Verbindung zwischen den Seitenstreben und der Grundplatte bzw. der Kopfplatte kann eine Schraubverbindung oder auch eine Schweißverbindung sein. In letzterem Fall entsteht ein skelettierter Käfig als Maschinengestell, an dem dann die erforderlichen Einheiten in den gewünschten Positionen mittels der verschiedenen Adapter montiert werden. Wenn, wie es alternativ möglich ist, die Seitenstreben mit der Grundplatte und der Kopfplatte verschraubt sind, ist ein Baukasten geschaffen, mit dem auch einfachere Maschinengestelle zu schaffen sind, die beispielsweise nur aus einer entsprechend aufgeständerten Kopfplatte oder einer Kopfplatte mit Seitenstreben (unter Wegfall der Grundplatte) bestehen. Für das durch Schraubverbindung zusammengefügte Maschinengestell ist es zweckmäßig, wenn Seitenstreben z.B. jeweils paarweise zu einem Rahmen zusammengefasst werden, der eine Anschlussstelle aufweist und mit der Kopfplatte und der Grundplatte zu verschrauben ist. Dadurch wird zusätzliche Stabilität gewonnen und die Maßhaltigkeit der Anschlussstelle sichergestellt.

Weitere Einzelheiten vorteilhafter Details und Fortentwicklungen der Erfindung sind Gegenstand der Zeichnung, der Beschreibung oder von Ansprüchen.

In der Zeichnung ist ein Ausführungsbeispiel der Erfindung veranschaulicht. Es zeigen:
- Figur 1: die erfindungsgemäße Werkzeugmaschine mit abgenommener Verkleidung in vereinfachter Perspektivdarstellung,
- Figur 2: die Werkzeugmaschine nach Figur 1 in einer anderen Perspektivdarstellung,
- Figur 3: das Maschinengestell der Werkzeugmaschine nach Figur 1 und 2 in Perspektivdarstellung,
- Figur 4: das Maschinengestell nach Figur 2 in Vertikalschnittdarstellung,

- Figur 5: Bearbeitungseinheiten der Werkzeugmaschine nach Figur 1 und 2 in Draufsicht,
- Figur 6: eine alternative Ausführungsform des Maschinengestells in Perspektivdarstellung und
- Figur 7: das Maschinengestell nach Figur 6 im Vertikalschnitt.

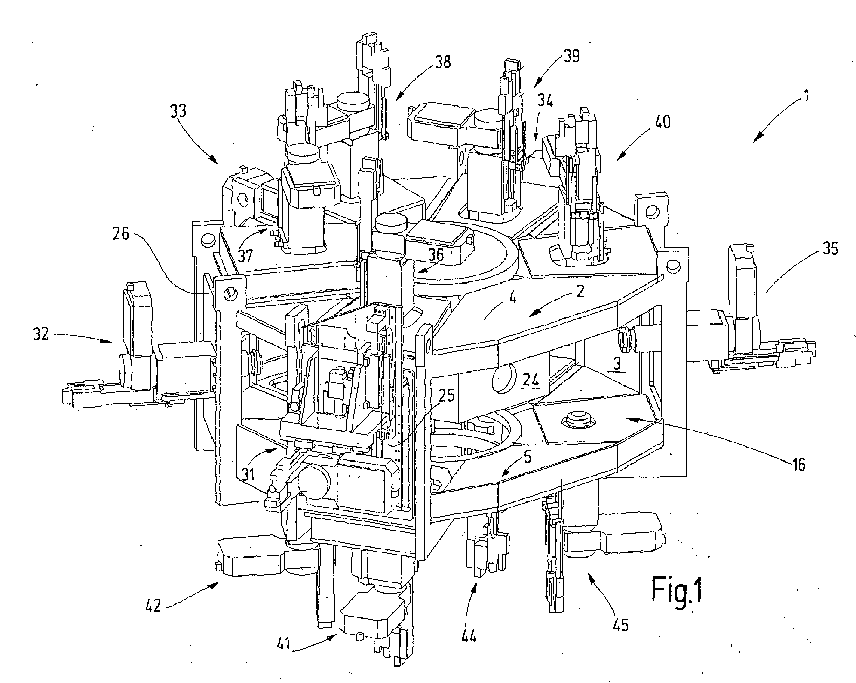

In Figur 1 ist eine Werkzeugmaschine 1 veranschaulicht, deren Konzept sich an das aus der DE 39 41 480 A1 bekannte Prinzip anlehnt, demgemäß ein Maschinengestell 2 einen Arbeitsraum 3 käfigartig umgibt. Das Maschinengestell 2 weist eine Kopfplatte 4, eine Grundplatte 5 und Seitenstreben 6, 7, 8, 9, 10, 11, 12, 13, 14, 15 auf. Die Kopfplatte 4 und die Grundplatte 5 sind im Abstand parallel zueinander angeordnet und in Gebrauch im Wesentlichen horizontal ausgerichtet. Die Seitenstreben 6 bis 15 setzen an ihrem Umfang an und verbinden die Kopfplatte 4 mit der Grundplatte 5. Dabei sind die Seitenstreben 6 bis 15 parallel zueinander angeordnet und in Gebrauch im Wesentlichen vertikal orientiert. Zwischen den Seitenstreben 6 bis 15 sind vorzugsweise rechteckige Fenster 16, 17, 18, 19 frei gelassen, die in Vertikalrichtung von der Grundplatte 5 und der Kopfplatte 4 begrenzt werden. Das Maschinengestell 2 ist insoweit skelettartig ausgebildet. Die Seitenstreben 6 bis 15 schließen den Arbeitsraum 3 somit nicht ab.

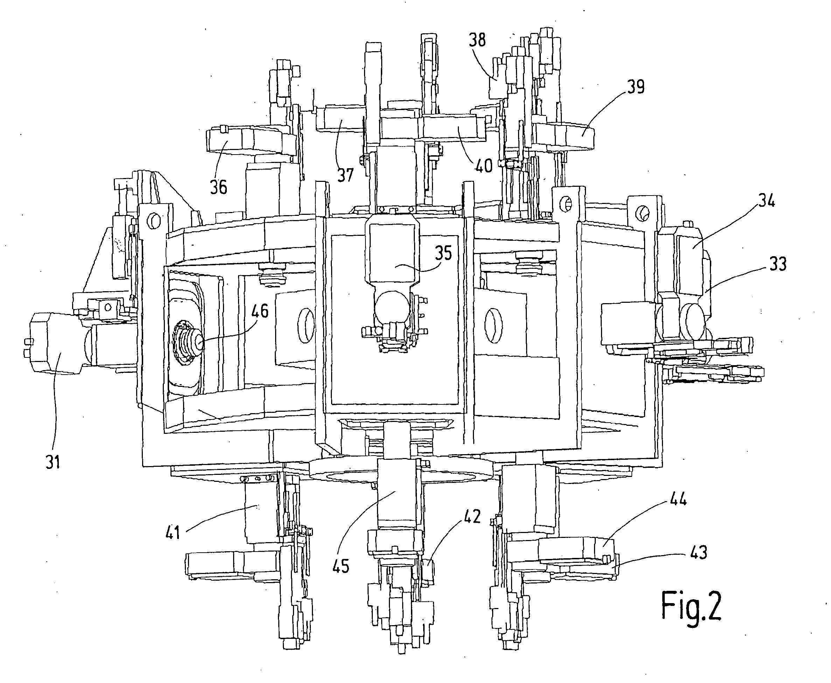

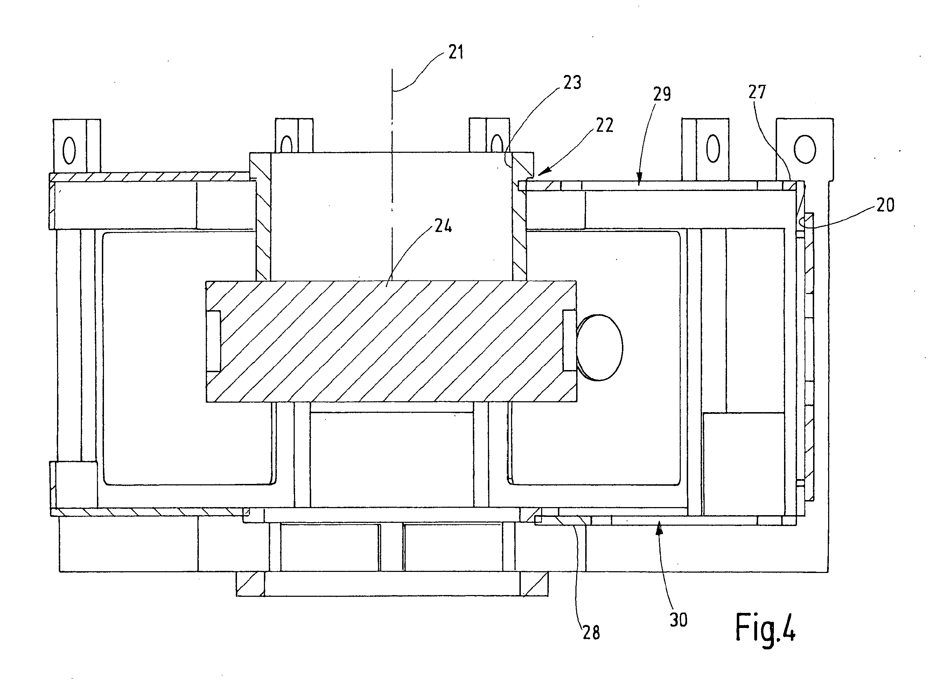

Die Fenster 16 bis 19 können unterschiedlich groß sein. Beispielsweise ist der Abstand zwischen den Seitenstreben 6 und 15 wesentlich größer als die Abstände zwischen den übrigen Seitenstreben. Das Fenster 16 kann z.B. als Be- und Entladefenster dienen. Die anderen Fenster dienen beispielsweise der Montage von Bearbeitungseinheiten, wie insbesondere aus den Figuren 1 und 2 ersichtlich ist. Hierzu sind jeweils zwischen Seitenstrebenpaaren, beispielsweise zwischen den Seitenstreben 6, 7, den Seitenstreben 8, 9 usw., Anschlussstellen 20 vorgesehen, wie sie aus Figur 4 am Beispiel der Anschlussstelle 20 hervorgehen. Die umfangsseitigen Anschlussstellen 20 sind an dem Maschinengestell 2 einheitlich ausgebildet. Dies betrifft sowohl ihre Größe als auch ihre Form als auch ihre Ausrichtung zu einer Bezugsachse des Maschinengestells 2. Diese Bezugsachse wird durch eine Drehachse 21 gebildet, die die Kopfplatte 4 bestimmt. Die Kopfplatte 4 weist mittig eine Öffnung 22 auf, an der eine Nabe 23 eines Werkstückträgers 24 drehbar gelagert ist. Von der Drehachse 21 des Werkstückträgers 24 haben alle Streben 6 bis 15 den gleichen Abstand. Außerdem sind sie parallel zu der Drehachse 21 orientiert. Entsprechend haben auch die zwischen den Streben 6 bis 15 jeweils paarweise festgelegten Anschlussstellen 20 den gleichen Abstand zu der Drehachse 21. Außerdem sind sie in gleicher Axialposition angeordnet, d.h. die Anschlussstellen 20 sind vertikal gegeneinander vorzugsweise nicht versetzt.

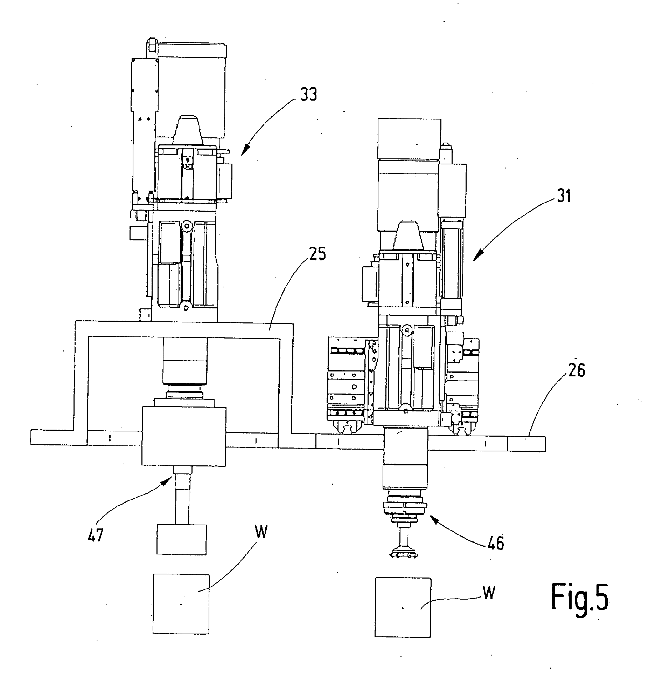

Jede der zwischen den Streben 6 bis 15 paarweise definierten Anschlussstellen wird vorzugsweise durch eine rechteckige, um das jeweilige Fenster 17, 19, usw. ringsum laufende plane Anlagefläche gebildet, deren Flächennormale die Drehachse 21 schneidet. Die Anlagefläche kann durch Ausnehmungen unterbrochen sein. Die Flächennormale der von der Anlagefläche festgelegten Ebene geht dabei vorzugsweise durch die Mitte des von der jeweiligen Anlagefläche umgrenzten Fensters und die Mitte des an dem Werkstückträger vorgesehenen Werkstückaufspannplatz. Vorzugsweise schneidet die Flächennormale die Drehachse 21. Die Anschlussstelle 20 ist dabei vorzugsweise mit Bohrungen, beispielsweise Gewindebohrungen, versehen, die um den Rand des Fensters 17 herum verteilt sind und dem Anschluss von Adaptern 25, 26 dienen, wie sie aus Figur 5 ersichtlich sind. Die Adapter 25, 26 sind unterschiedlich ausgebildet. Sie weisen jedoch einheitliche Anlageflächen auf, die mit den Anschlussstellen 20 einheitliche Schnittstellen bilden. Die Adapter verbinden die jeweilige Bearbeitungseinheit vorzugsweise starr mit dem Maschinengestell, wobei die Bearbeitungseinheit Verstelleinrichtungen zur Längs- oder Querbewegung der Arbeitsspindel aufweisen kann.

Vorzugsweise sind an dem Maschinengestell 2 Anschlussstellen 20 lediglich zwischen jedem zweiten Strebenpaar 6, 7; 8, 9 angeordnet. Somit entfallen auf zehn Streben fünf Anschlussstellen. Die Winkelabstände der Anschlussstellen stimmen dabei vorzugsweise mit den Winkelabständen der Seiten des polygonal umgrenzten Werkstückträgers 24 überein, die die Werkstückaufspannplätze tragen. Außerdem sind die Anschlussstellen 20, d.h. deren Anlageflächen, parallel zu den jeweiligen Seitenflächen des Werkstückträgers 24 ausgerichtet.

Obwohl somit z.B. an dem Fenster 18 keine Anschlussstelle ausgebildet ist, wird dieses Fenster 18 von den benachbarten Streben 7, 8 nicht verdeckt - es kann offen stehen. Die Streben 7, 8 haben vorzugsweise rein lasttragende Funktion und dienen dann nicht dem Abschluss des Arbeitsraums 3. Die Fenster zwischen den Strebenpaaren 15/6, 7/8, 9/10, 11/12, 13/14 dienen im vorliegenden Beispiel nicht der Anordnung von Adaptern. Sie können als Ladeöffnungen, Kontrollöffnungen, Öffnungen für Medien und dergleichen, genutzt werden und/oder bei Bedarf durch Abdeckbleche verschlossen werden. Diese erfüllen keine lasttragende Funktion, können aber auch als Versteifungen ausgebildet sein.

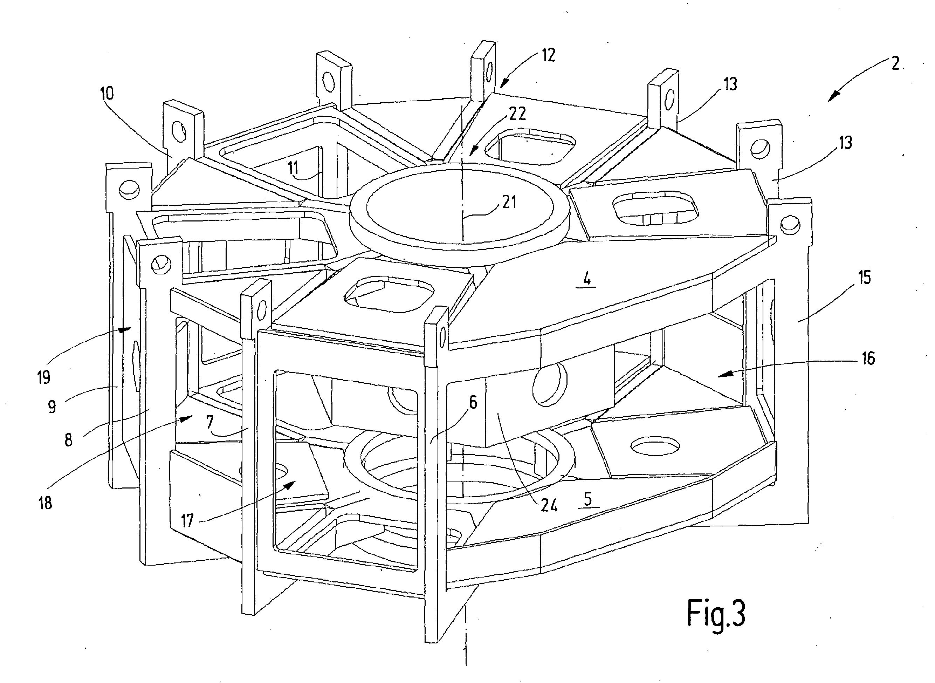

Weitere Anschlussstellen für Adapter von Bearbeitungseinheiten sind an der Kopfplatte 4 und an der Grundplatte 5 angeordnet, wie aus Figur 3 und 4 am Beispiel der Anschlussstellen 27, 28 hervorgeht. Die Anschlussstellen 27, 28 sind vorzugsweise untereinander gleich ausgebildet, in gleichen Winkelabständen und auf gleichem Radius zur Drehachse 21 angeordnet. Sie bestehen aus einer ebenen Anlagefläche, die ein großzügig bemessenes Fenster 29, 30 umgibt. Die Anlagefläche ist zu der Drehachse 21 radial orientiert. Das jeweilige Fenster 29, 30 weist in Draufsicht einen rechteckigen oder einen trapezförmigen Umriss auf. Insoweit können die Anschlussstellen 27, 28 von den Anschlussstellen 20 abweichend ausgebildet sein.

Die Anschlussstellen 27, 28 sind vorzugsweise in Nachbarschaft der Anschlussstellen 20, d.h. an die gleichen Strebenpaare anschließend angeordnet. Sind an dem Maschinengestell 2 gemäß Figur 3 zwischen den Strebenpaaren 6/7, 8/9, 10/11, 12/13, 14/15 Anschlussstellen 20 ausgebildet, so gilt dies auch für Anschlussstellen 27, 28 der Kopfplatte 4 und der Grundplatte 5, an denen entsprechende rippenartige Verstärkungen in spitzem Winkel zueinander zu der Öffnung 22 verlaufen. Diese rippenartigen Verstärkungen nehmen die in die Anschlussstelle eingeleiteten Lasten auf. Die drei Anschlussstellen 20, 27, 28, die an einer jeweiligen, sich auf die Drehachse 21 beziehenden gleichen Winkelposition angeordnet sind, legen eine Werkstückbearbeitungsposition fest. Der Werkstückträger 24 ist so bewegbar, dass die aufgenommenen Werkstücke die jeweiligen Bearbeitungspositionen nacheinander durchlaufen.

Das insoweit beschriebene, vorzugsweise als Schweißkonstruktion ausgebildete Maschinengestell 2 wird durch Bearbeitungseinheiten 31 bis 44 zu einer Werkzeugmaschine konfiguriert. Die Bearbeitungseinheiten 31 bis 35 sind dabei an den Anschlussstellen 20 angeordnet, die jeweils zwischen benachbarten Streben vorgesehen sind. Die Bearbeitungseinheiten 36 bis 40 sind auf der Kopfplatte 4 an den dort vorhandenen Anschlussstellen 27 angeordnet. Die Bearbeitungseinheiten 41 bis 45 sind an der Grundplatte 5 der Werkzeugmaschine 1 an den dort vorhandenen Anschlussstellen 28 angeordnet. Die Bearbeitungseinheiten können gleich oder unterschiedlich ausgebildet sein. Sie weisen jeweils zumindest eine Arbeitsspindel 46, 47 auf, wie in Figur 2 beispielhaft anhand der Bearbeitungseinheit 31 oder anhand der aus Figur 5 ersichtlichen Bearbeitungseinheit 33 ersichtlich ist. Sie können mit Zustelleinrichtungen zur gezielten Längs- oder Transversalbewegung der Arbeitsspindel 46, 47 und mit Spindelantrieben versehen sein, die die Arbeitsspindeln 46, 47 gezielt in Rotation versetzen.

In Figur 5 sind die beiden unterschiedlich ausgebildeten Bearbeitungseinheiten 31, 33 nebeneinander gestellt, die durch unterschiedliche Adapter 25, 26 an einheitliche Anschlussstellen 20 anzuschließen sind. Die Adapter 25, 26 können in unterschiedlichen Bauarten und -typen bereitgehalten oder bedarfsweise bereitgestellt werden, wobei sie alle an den Anschluss der einheitlichen Anschlussstelle 20 (oder alternativ 27, 28) anzuschließen sind. Durch die Gestaltung der Adapter 25, 26 können die Bearbeitungseinheiten 31, 33 jedoch in Individualpositionen gebracht werden, die die Fertigung einer spezifischen Werkstückserie erfordert. Beispielsweise können die Bearbeitungseinheiten 31, 33 in unterschiedlichen Radialpositionen gehalten sein, wie Figur 5 veranschaulicht. Ebenso können die Adapter die Bearbeitungseinheiten 31, 33 in unterschiedlichen Vertikalpositionen und in unterschiedlichen Winkelausrichtungen halten. Werden beispielsweise komplizierte Werkstücke mit Schrägbohrungen, Schrägflächen und dergleichen gefertigt können diese rationell hergestellt werden, wenn die entsprechenden Bearbeitungseinheiten in der gewünschten Schräglage montiert sind. Unter "Schräglage" wird dabei ein mit der Radialrichtung eingeschlossener Winkel verstanden. (Die Radialrichtung bezieht sich auf die Drehachse.) Solche Schräglagen legen die Adapter fest, die nicht Teil des Maschinengestells 2 sind. Das Maschinengestell 2 bildet somit eine für verschiedene Ausrüstungen der Werkzeugmaschine 1 immer wieder verwendbare einheitliche Schweißkonstruktion, die durch Anbau unterschiedlicher Adapter 25, 26 für den speziellen Verwendungszweck, d.h. für die Herstellung einer speziellen Werkstückserie hergerichtet wird. Die Adapter 25, 26 sind für sich genommen vorzugsweise geschweißte Bauteile, die mit dem Maschinengestell 2 verschraubt werden.

Das obige gilt entsprechend für die an der Kopfplatte 4 und/oder der Bodenplatte zu montierenden Bearbeitungseinheiten 36 bis 45. Die Anschlussstellen 27, 28 sind vorzugsweise untereinander einheitlich ausgebildet. Die Individualpositionierung der Bearbeitungseinheiten 36 bis 45 erfolgt durch Adapter. Adapter können in vorgefertigten Gestaltungen vorgehalten oder bedarfsweise konstruiert und bereitgestellt werden.

Die insoweit beschriebene Werkzeugmaschine 1 arbeitet wie folgt:

In Betrieb werden die einzelnen Werkstücke von dem Werkstückträger 24 an seinen ebenen Umfangsflächen aufgenommen. Es sind dort entsprechende Werkstückaufspannmittel, beispielsweise in Form fester Spannplätze oder von Drehtischen, Planetentischen oder dergleichen, vorgesehen. Die Bestückung des Werkstückträgers 24 erfolgt beispielsweise durch das Fenster 16, das wesentlich größer ausgebildet sein kann als die übrigen Fenster. Im Ausführungsbeispiel sind fünf der vorzugsweise sechs Umfangsflächen des Werkstückträgers 24 jeweils drei Bearbeitungseinheiten, eine obere vertikal hängende, eine seitliche, radial liegende und eine untere vertikal stehende Bearbeitungseinheit zugeordnet. Mit diesen kann die Bearbeitung des Werkstücks gleichzeitig von drei Seiten her erfolgen. Das Werkstück wird von Arbeitsstation zu Arbeitsstation getaktet, indem der Werkstückträger jeweils um z.B. 60° um die Drehachse 21 gedreht wird. Nach Durchlaufen aller Bearbeitungsstationen kann das bearbeitete Werkstück wiederum durch das Fenster 16 entnommen werden.

Die Bearbeitungseinheiten 31 bis 45 arbeiten vorzugsweise ohne Werkzeugwechsel. Falls ein Werkzeugwechsel vorzusehen ist, werden Revolverköpfe bevorzugt, wie sie aus der DE 39 41 480 zu entnehmen sind. Die Revolverköpfe sind mit den in der jeweiligen Bearbeitungsstation zu betreibenden Werkzeugen versehen, so dass ein Werkzeugwechsel, wie er bei Bearbeitungszentren durchgeführt wird, überflüssig ist.

Die insoweit beschriebene Werkzeugmaschine 1 ist mit genau den Bearbeitungseinheiten versehen, die zur Herstellung des betreffenden Werkstücks erforderlich sind. Die Bearbeitungseinheiten sind dabei werkstückspezifisch ausgebildet und/oder ausgerichtet und somit hinsichtlich des zu bearbeitenden Werkstücks individualisiert. Die Werkzeugmaschine arbeitet ohne Werkzeugwechsel fortlaufend und ist somit hoch produktiv. Sie kann in der Großserienfertigung eingesetzt werden.

Soll die Werkzeugmaschine 1 auf eine andere Fertigung eingerichtet werden, können die Bearbeitungseinheiten durch Wechsel der Adapter anders ausgerichtet werden, sie können gegen andere Bearbeitungseinheiten ausgetauscht werden und es ist möglich, die Zahl der Bearbeitungseinheiten zu ändern. Beispielsweise kann ein Adapter so gestaltet sein, dass er zwei oder mehrere Bearbeitungseinheiten neben oder übereinander aufnimmt, die gleich oder unterschiedlich ausgerichtete Arbeitsspindeln aufweisen. Das Maschinengestell 2 und vorzugsweise auch der Werkstückträger 24 bleiben in diesem Fall unverändert, wobei an letzterem jedoch die Werkstückaufspannplätze geändert werden können. Durch die einheitliche Ausbildung der Anschlussstellen 20 sowie 27 und 28 ist ein schneller und kostengünstiger Umbau der Werkzeugmaschine 1 möglich. Es wird nach dem Umbau wiederum eine werkstückspezifische, zur Massenfabrikation geeignete Werkzeugmaschine erhalten, die wie zuvor als Fertigungsautomat zu betreiben ist.

Durch die Adapter gewinnt der Fertigungsautomat Umrüstmöglichkeiten, die die Hemmschwelle zur Anschaffung einer solchen Werkzeugmaschine senken. Der Maschinenbetreiber hat die Aussicht, die Werkzeugmaschine bei Wechsel der herzustellenden Werkstücke nach einer relativ Überschaubaren weiter betreiben zu können. Er ist deshalb in der Großserienfertigung nicht auf die Verwendung der hinsichtlich ihres Ausstoßes vergleichsweise unproduktiven Bearbeitungszentren angewiesen sondern kann auf werkstückspezifisch individualisierte Fertigungsautomaten zurückgreifen, wie sie durch die Werkzeugmaschine 1 gebildet werden.

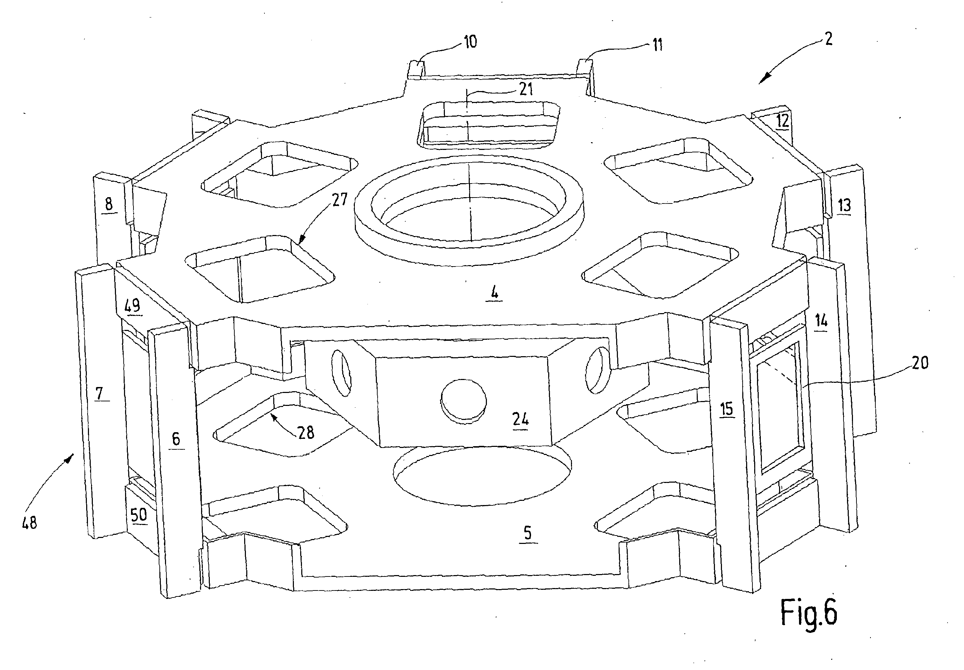

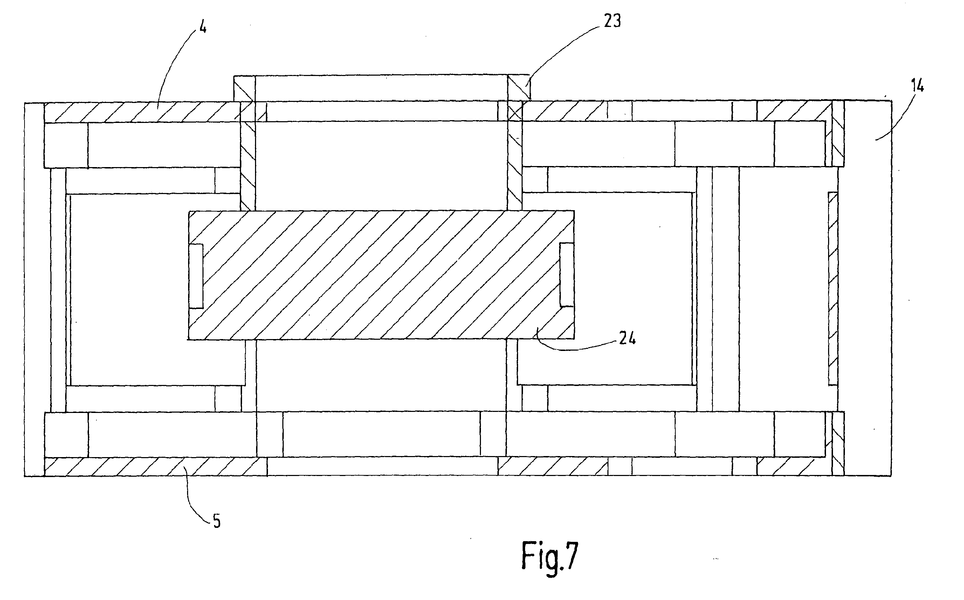

In den Figuren 6 und 7 ist eine abgewandelte Bauform eines Maschinengestells 2 der erfindungsgemäßen Werkzeugmaschine veranschaulicht. Wiederum besteht das Maschinengestell 2 aus einer Kopfplatte 4, aus einer Grundplatte 5 und Seitenstreben 6 bis 15. Letztere sind jeweils paarweise mit oberen und unteren Querstreben zu rechteckigem Rahmen 48 verschweißt. Figur 6 veranschaulicht dies am Beispiel der Seitenstreben 6, 7, die an ihrem oberen und an ihrem unteren Ende durch die Querstreben 49, 50 miteinander verbunden sind. Dieser Rahmen 48 ist an entsprechenden Anlageflächen mit der Kopfplatte 4 und der Grundplatte 5 verschraubt. Im Ausführungsbeispiel sind dazu die Querstreben 49, 50 mit der Kopfplatte 4 und der Grundplatte 5 verschraubt. Ebenso sind die anderen jeweils aus Paaren von Seitenstreben 8/9, 10/11, 12/13, 14/15 gebildeten Rahmen mit der Kopfplatte 4 und der Grundplatte 5 verschraubt. Die Anschlussstellen 20 sind jeweils an den einzelnen Rahmen 6/7, 8/9, 10/11, 12/13, 14/15 ausgebildet und untereinander gleich. Ebenso sind an der Kopfplatte 4 und an der Grundplatte 5 Anschlussstellen 27, 28 zum Anschluss von Bearbeitungseinheiten vorgesehen. Die Anschlussstellen 27, 28 sind wie die Anschlussstellen 20 vorzugsweise rechteckig oder quadratisch ausgebildet und durch von dem Maschinengestell 2 weg nach außen weisende Planflächen gebildet, wie es auch bei dem vorstehend beschriebenen Ausführungsbeispiel schon der Fall war. Der Normalenvektor der Planflächen der Anschlussstellen 27, 28 weist somit parallel zu der Drehachse 21 während der Normalenvektor der umfangsseitigen Anschlussstellen 20 bezüglich der Drehachse 21 radial nach außen weist.

Das Maschinengestell 2 kann, wie in Figur 6 veranschaulicht, als geschraubter Käfig Anwendung finden. Es ist jedoch auch möglich, lediglich Teile desselben zu verwenden. Beispielsweise kann eine einfache Werkzeugmaschine erhalten werden, indem lediglich die Kopfplatte 4 und der Werkstückträger 24 vorhanden sind. Die Seitenstützen und die Grundplatte können dann entfallen und durch einen geeigneten Ständer ersetzt werden. Eine solche Werkzeugmaschine weist dann nur die rechteckigen oder trapezförmigen (oder auch anderweitig gestalteten) Anschlussstellen 27 auf, an denen über Adapter Bearbeitungseinheiten angeordnet sind.

Sollen mehr Bearbeitungseinheiten untergebracht werden, ist es möglich, die Kopfplatte 4 mit den Seitenstützen 6 bis 15 bzw. den aus ihnen gebildeten Rahmen zu kombinieren, wobei die Grundplatte 5 entfällt oder durch ein geschlossenes Element ohne Anschlussstellen für Bearbeitungseinheiten ersetzt wird. Damit wird mit dem geschraubten Maschinengestell 2 nach Figur 6 und 7 ein Baukasten geschaffen, aus dem sich verschiedene Werkzeugmaschinentypen zusammensetzen lassen. Die Gemeinsamkeit dieser verschiedenen Werkzeugmaschinentypen liegt darin, dass das Maschinengestell Anschlussstellen 20, 27 und/oder 28 für Adapter aufweist und dass die Bearbeitungseinheiten an den Adaptern gehalten sind. Des Weiteren sind die Anschlussstellen vorzugsweise einheitlich positioniert. Beispielsweise liegen die Anschlussstellen 27 und 28 jeweils auf einem zu der Drehachse 21 konzentrischen Kreis und weisen den gleichen Abstand zu der Drehachse 21 sowie gleichmäßige Winkelabstände von z.B. 60° auf. Die individuelle Positionierung der Bearbeitungseinheiten ist Sache der Adapter.

Zur Großserienfertigung haben sich Fertigungsautomaten etabliert, die werkstückspezifisch angeordnete und ausgerichtete Bearbeitungseinheiten aufweisen. Erfindungsgemäß wird die Struktur eines solchen Fertigungsautomaten in ein unspezifisches vereinheitlichtes Maschinengestell 2 und Adapter 25, 26 aufgeteilt, die über einheitliche Schnittstellen an das Maschinengestell 2 angeschlossen sind und auf Seiten der Bearbeitungseinheiten zur Aufnahme derselben individualisiert sind. Außerdem können die Adapter 25, 26 werkstückspezifisch individualisiert sein, indem sie hinsichtlich der Vertikal-, Horizontal- und Radialpositionierung sowie hinsichtlich der Ausrichtung der Arbeitsspindeln der Bearbeitungseinheiten spezifisch für das zu fertigende Werkstück eingerichtet sind. Durch Wechsel der Adapter und Bearbeitungseinheiten kann die Werkzeugmaschine 1 mit einfachen Mitteln schnell und kostengünstig umgerüstet werden.

## Patentansprüche

1. Werkzeugmaschine (1) zur spanabhebenden Bearbeitung von Werkstücken (W),
mit einem Maschinengestell (2), an dem ein zentraler Werkstückträger (24) beweglich gelagert ist und das zumindest eine Anschlussstelle (20) aufweist,
mit zumindest einer Bearbeitungseinheit (31), die mit zumindest einem Werkzeug zum Bearbeiten des Werkstücks (W) versehen ist,
mit einem Adapter (26), der zwischen der Anschlussstelle (20) und der Bearbeitungseinheit (31) angeordnet ist und die Bearbeitungseinheit (31) mit dem Maschinengestell (2) verbindet.

2. Werkzeugmaschine nach Anspruch 1, **dadurch gekennzeichnet, dass** das Maschinengestell (2) einen Käfig bildet, der einen Innenraum (3) umgrenzt, in dem das Werkzeug und das Werkstück (W) angeordnet sind.

3. Werkzeugmaschine nach Anspruch 1, **dadurch gekennzeichnet, dass** das Maschinengestell (2) skelettiert ist.

4. Werkzeugmaschine nach Anspruch 1, **dadurch gekennzeichnet, dass** das Maschinengestell (2) aus einer Kopfplatte (4), einer Grundplatte (5) und Seitenstreben (6-15) besteht, die an den jeweiligen Außenumfang der Kopfplatte (4) und der Grundplatte (5) angeschlossen sind und diese miteinander verbinden.

5. Werkzeugmaschine nach Anspruch 1, **dadurch gekennzeichnet, dass** die Seitenstreben (6-15) gerade ausgebildet und parallel zueinander angeordnet sind.

6. Werkzeugmaschine nach Anspruch 4, **dadurch gekennzeichnet, dass** der Werkstückträger (24) von der Kopfplatte (4) getragen ist.

7. Werkzeugmaschine nach Anspruch 1, **dadurch gekennzeichnet, dass** der Werkstückträger (24) um eine Drehachse (21) drehbar gelagert ist.

8. Werkzeugmaschine nach Anspruch 7, **dadurch gekennzeichnet, dass** die Drehachse (21) in Gebrauch vertikal orientiert ist.

9. Werkzeugmaschine nach Anspruch 4 und 8, **dadurch gekennzeichnet, dass** die Seitenstreben (6-15) in einheitlichen Abständen zu der Drehachse (21) angeordnet sind.

10. Werkzeugmaschine nach Anspruch 4, **dadurch gekennzeichnet, dass** die Seitenstreben (6-15) jeweils in Paaren (6/7, 8/9, 10/11, 12/13, 14/15) in einheitlichen Abständen zueinander angeordnet sind.

11. Werkzeugmaschine nach Anspruch 4, **dadurch gekennzeichnet, dass** jeweils zwischen zwei Seitenstreben (6-15) eines Seitenstrebenpaars (6/7, 8/9, 10/11, 12/13, 14/15) eine Anschlussstelle (20) ausgebildet ist.

12. Werkzeugmaschine nach Anspruch 4, **dadurch gekennzeichnet, dass** wenigstens eine Anschlussstelle (27) an der Kopfplatte (4) vorgesehen ist.

13. Werkzeugmaschine nach Anspruch 4, **dadurch gekennzeichnet, dass** wenigstens eine Anschlussstelle (28) an der Grundplatte (5) angeordnet ist.

14. Werkzeugmaschine nach Anspruch 4, **dadurch gekennzeichnet, dass** die Seitenstreben (6-15) mit der Kopfplatte (4) verschraubt sind.

15. Werkzeugmaschine nach Anspruch 4, **dadurch gekennzeichnet, dass** die Seitenstreben (6-15) mit der Grundplatte (5) verschraubt sind.

16. Werkzeugmaschine nach Anspruch 14 oder 15, **dadurch gekennzeichnet, dass** Paare (6/7, 8/9, 10/11, 12/13, 14/15) der Seitenstreben (6-15) jeweils einen Rahmen (48) bilden, an dem jeweils die Anschlussstelle (20) ausgebildet ist.

17. Werkzeugmaschine nach Anspruch 16, **dadurch gekennzeichnet, dass** der Rahmen (48) eine rechteckige Form aufweist.

18. Werkzeugmaschine nach Anspruch 1, **dadurch gekennzeichnet, dass** die Anschlussstelle (20) wenigstens eine Positionierfläche aufweist, der Befestigungsmittel für die Bearbeitungseinheiten (31-45) zugeordnet sind.

19. Werkzeugmaschine nach Anspruch 18, **dadurch gekennzeichnet, dass** die Positionierfläche eine ebene, zusammenhängende oder unterbrochene Fläche ist.

20. Werkzeugmaschine nach Anspruch 18, **dadurch gekennzeichnet, dass** die Befestigungsmittel durch Bohrungen und Schrauben gebildet sind.

21. Werkzeugmaschine nach Anspruch 1, **dadurch gekennzeichnet, dass** mehrere untereinander gleich ausgebildete Anschlussstellen (20, 27, 28) vorgesehen sind.

22. Werkzeugmaschine nach Anspruch 21, **dadurch gekennzeichnet, dass** Anschlussstellen (20, 27, 28) gruppenweise in einheitlicher Anordnung vorgesehen sind.

23. Werkzeugmaschine nach Anspruch 21, **dadurch gekennzeichnet, dass** die Adapter (25, 26) unterschiedlich ausgebildet sind.

24. Werkzeugmaschine nach Anspruch 1, **dadurch gekennzeichnet, dass** die Anschlussstellen (20, 27, 28) an in dem Maschinengestell (2) vorgesehenen Fenstern (17, 19) ausgebildet sind.

25. Werkzeugmaschine nach Anspruch 24, **dadurch gekennzeichnet, dass** die Adapter (25, 26) die Fenster (17, 19) überbrücken.
